# EUROPEAN PATENT APPLICATION

(11) **EP 4 492 346 A1**
(43) Date of publication of application: **15.01.2025**
(21) Application number: 24181365.8
(22) Date of filing: 11.06.2024
(51) Int. Cl.: G07C 5/08, B60W 40/09

(54) **AUTONOMOUS DRIVING SYSTEM**

(30) Priority: 10.07.2023 JP 2023113258
(71) Applicant: TOYOTA JIDOSHA KABUSHIKI KAISHA, Aichi-ken, 471-8571 (JP)
(72) Inventor: OHSUGI, Masamichi, Tokyo, 103-0022 (JP); URANO, Hiromitsu, Tokyo, 103-0022 (JP)
(74) Representative: J A Kemp LLP

(57) **Abstract**

The present disclosure provides an autonomous driving system (100) mounted on a vehicle (1) and configured to perform autonomous driving of the vehicle (1) by using a machine learning model. The autonomous driving system (100) comprises one or more processors (110) and one or more storage devices (120). When the autonomous driving is performed, the one or more processors (110) are configured to execute acquiring log data (LOG) related to the autonomous driving, acquiring a current state of an operator of the vehicle (1), acquiring an ideal state that is a state of the operator required by the autonomous driving system (100), and storing the log data (LOG) in the one or more storage devices (120). Storing the log data (LOG) includes compressing or deleting target data that is a part of the log data (LOG) when the current state of the operator matches the ideal state.

## Description

### BACKGROUND

### Field

The present disclosure relates to an autonomous driving system which performs autonomous driving of a vehicle using a machine learning model.

### Background Art

Patent Literature 1 discloses a vehicle travel recording device that records monitoring image data of surroundings of a vehicle. The vehicle travel recording device stores image data obtained by a camera mounted on a vehicle capturing the surroundings of the vehicle. However, not all of the image data is stored, and a range in which a driver's gaze direction and range in which a moving object around the vehicle is captured is recorded as a surrounding situation monitoring image data.

In addition to the above-described Patent Literature 1, the following Patent Literature 2 and Patent Literature 3 can be exemplified as documents showing the technical level of the technical field related to the present disclosure.

### List of Related Art

Patent Literature 1: Japanese Laid-Open Patent Application No. 2020-106921
Patent Literature 2: Japanese Laid-Open Patent Application No. 2021-051604
Patent Literature 3: Japanese Laid-Open Patent Application No. 2009-015789

### SUMMARY

As disclosed in Patent Literature 1, a device for storing information during traveling of a vehicle, such as a drive recorder, is known. Such device can be used for analysis of a cause of an accident or the like. It is the same as a system which performs autonomous driving using a machine learning model that information is required to be stored in preparation for a case where verification is required later. That is, it is important to store data related to autonomous driving so that it is possible to verify later how the autonomous driving using a machine learning model has been performed.

However, when all data related to the autonomous driving is stored, a capacity of a storage device may become insufficient. Therefore, how to ensure a capability of explanation of the autonomous driving control while preserving the capacity of the storage device is a problem.

An object of the present disclosure is to provide a technique that can ensure a capability of explanation of autonomous driving control of a vehicle while reducing a data volume when storing log data related to the autonomous driving control.

The present disclosure provides an autonomous driving system mounted on a vehicle and configured to perform autonomous driving of the vehicle by using a machine learning model. The autonomous driving system comprises one or more processors and one or more storage devices. When the autonomous driving is performed, the one or more processors are configured to execute acquiring log data related to the autonomous driving, acquiring a current state of an operator of the vehicle, acquiring an ideal state that is a state of the operator required by the autonomous driving system, and storing the log data in the one or more storage devices. Storing the log data includes compressing or deleting target data that is a part of the log data when the current state of the operator matches the ideal state.

According to the technique of the present disclosure, the autonomous driving system stores data obtained by compressing or deleting a part of the log data in one or more storage devices according to a condition. Specifically, when the current state of the operator matches the ideal state, a part of the log data is compressed or deleted. That the current state of the operator matches the ideal state is considered to mean that the operator sufficiently monitors the autonomous driving. By compressing or deleting the data when it is confirmed that monitoring by the operator is sufficiently performed, it is possible to reduce a volume of the data to be stored while ensuring capability of explanation of the autonomous driving control.

### BRIEF DESCRIPTION OF THE DRAWINGS

Fig. 1 is a diagram showing an example of a configuration related to autonomous driving control of a vehicle according to a present embodiment.
Fig. 2 is a diagram showing an example of a configuration of an autonomous driving system according to the present embodiment.
Fig. 3 is a flowchart showing an example of processing executed by the autonomous driving system according to the present embodiment.
Fig. 4 is a flowchart showing a modification of processing executed by the autonomous driving system according to the present embodiment.
Fig. 5 is a schematic diagram showing an example of setting log storage priority according to the present embodiment.

### DETAILED DESCRIPTION

### 1. Autonomous driving of Vehicle

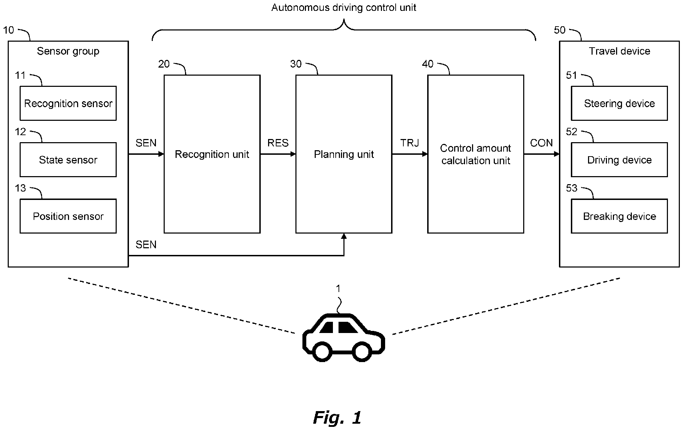

An autonomous driving system according to a present embodiment is mounted on a vehicle and performs autonomous driving control of the vehicle. Fig. 1 is a block diagram showing an example of a configuration related to the autonomous driving control of a vehicle 1. Autonomous driving is automatically performing at least one of steering, acceleration, and deceleration of the vehicle 1 without depending on operation by a human. The autonomous driving control is a concept including not only complete autonomous driving control but also risk avoidance control, lane keep assist control, and the like.

The vehicle 1 includes a sensor group 10, a recognition unit 20, a planning unit 30, a control amount calculation unit 40, and a travel device 50.

The sensor group 10 includes a recognition sensor 11 used for recognizing a situation around the vehicle 1. Examples of the recognition sensor 11 include a camera, a laser imaging detection and ranging (LIDAR), and a radar. The camera may include a plurality of cameras such as a front camera, which captures a forward image as seen from the vehicle 1, a right side camera, which captures a right lateral image as seen from the vehicle 1, a left side camera, which captures a left lateral image as seen from the vehicle 1, and a rear camera, which captures a backward image as seen from the vehicle 1. The sensor group 10 may further include a state sensor 12, which detects a state of the vehicle 1, a position sensor 13, which detects a position of the vehicle 1, and the like. Examples of the state sensor 12 include a speed sensor, an acceleration sensor, a yaw rate sensor, and a steering angle sensor. As the position sensor 13, a global navigation satellite system (GNSS) sensor is exemplified.

Sensor detection information SEN is information acquired by the sensor group 10. For example, the sensor detection information SEN includes the image captured by the camera. As another example, the sensor detection information SEN may include point group information acquired by the LIDAR. The sensor detection information SEN may include vehicle state information indicating the state of the vehicle 1. The sensor detection information SEN may include position information indicating the position of the vehicle 1.

The recognition unit 20 receives the sensor detection information SEN. The recognition unit 20 recognizes the situation around the vehicle 1 based on the information acquired by the recognition sensor 11. For example, the recognition unit 20 recognizes an object around the vehicle 1. Examples of the object include a pedestrian, another vehicle (e.g., a preceding vehicle, a parked vehicle, or the like), a white line, a road structure (e.g., a guard rail or a curb), a fallen object, a traffic light, an intersection, and a sign. The recognition result information RES indicates a recognition result by the recognition unit 20. For example, the recognition result information RES includes object information indicating a relative position and a relative speed of the object with respect to the vehicle 1.

The planning unit (planner) 30 receives the recognition result information RES from the recognition unit 20. The planning unit 30 may also receive the vehicle state information, the position information, and map information generate in advance. The map information may be high-precision three dimensional map information. The planning unit 30 generates a travel plan of the vehicle 1 based on the received information. The travel plan may be for reaching a destination set in advance or for avoiding a risk. Examples of the travel plan include maintaining a currently traveling lane, changing lanes, overtaking, turning right or left, steering, accelerating, decelerating, and stopping. Further, the planning unit 30 generates a target trajectory TRJ required for the vehicle 1 to travel in accordance with the travel plan. The target trajectory TRJ includes a target position and a target speed.

The control amount calculation unit 40 receives the target trajectory TRJ from the planning unit 30. The control amount calculation unit 40 calculates a control amount CON required for the vehicle 1 to follow the target trajectory TRJ. It can be said that the control amount CON is, in other words, a control amount required to reduce a deviation of the vehicle 1 from the target trajectory TRJ. The control amount CON includes at least one of a steering control amount, a driving control amount, and a braking control amount. Examples of the steering control amount include a target steering angle, a target torque, a target motor angle, and a target motor drive current. Examples of the driving control amount include a target speed and a target acceleration. Examples of the braking control amount include a target speed and a target deceleration.

The travel device 50 includes a steering device 51, a driving device 52, and a braking device 53. The steering device 51 steers the wheels. For example, the steering device 51 includes an electric power steering (EPS) device. The driving device 52 is a power source that generates a driving force. Examples of the driving device 52 include an engine, an electric motor, and an in-wheel motor. The braking device 53 generates a braking force. The travel device 50 receives the control amount CON from the control amount calculation unit 40. The travel device 50 operates the steering device 51, the driving device 52, and the braking device 53 in accordance with the steering control amount, the driving control amount, and the braking control amount, respectively. As a result, the vehicle 1 travels so as to follow the target trajectory TRJ.

The recognition unit 20 includes at least one of a rule-based model and a machine learning model. The rule-based model performs a recognition process based on a predetermined rule group. Examples of the machine learning model include a neural network (NN), a support vector machine (SVM), a regression model, and a decision tree model. The NN may be a convolutional neural network (CNN), a recurrent neural network (RNN), or a combination thereof. The type of each layer, the number of layers, and the number of nodes in the NN are arbitrary. The machine learning model is generated in advance through machine learning. The recognition unit 20 performs the recognition process by inputting the sensor detection information SEN to the model. The recognition result information RES is output from the model or generated based on the output from the model.

Similarly, the planning unit 30 also includes at least one of a rule-based model and a machine learning model. The planning unit 30 performs a planning process by inputting the recognition result information RES to the model. The target trajectory TRJ is output from the model or generated based on the output from the model.

Similarly, the control amount calculation unit 40 includes at least one of a rule-based model and a machine learning model. The control amount calculation unit 40 performs a control amount calculation process by inputting the target trajectory TRJ to the model. The control amount CON is output from the model or generated based on the output from the model.

Two or more of the recognition unit 20, the planning unit 30, and the control amount calculation unit 40 may have an integrated architecture. All of the recognition unit 20, the planning unit 30, and the control amount calculation unit 40 may have an integrated architecture (End-to-End architecture). For example, the recognition unit 20 and the planning unit 30 may be integrally constituted by an NN that outputs the target trajectory TRJ from the sensor detection information SEN. Even in the case of the integrated architecture, intermediate products such as the recognition result information RES and the target trajectory TRJ may be output. For example, when the recognition unit 20 and the planning unit 30 are integrally constituted by an NN, the recognition result information RES may be an output of an intermediate layer of the NN.

The recognition unit 20, the planning unit 30, and the control amount calculation unit 40 constitute an "autonomous driving control unit", which controls autonomous driving of the vehicle 1. In the present embodiment, a machine learning model is applied to at least a part of the autonomous driving control unit. That is, at least one of the recognition unit 20, the planning unit 30, and the control amount calculation unit 40 includes a machine learning model. The autonomous driving control unit performs at least a part of the autonomous driving control of the vehicle 1 by using the machine learning model.

As described above, the autonomous driving of the vehicle 1 is performed by the autonomous driving control unit of the autonomous driving system. However, even when the autonomous driving control is performed, the autonomous driving system does not control the vehicle 1 with no need for help by a human. Even while the autonomous driving control of the vehicle 1 is performed, an operator is riding on the vehicle 1 in wait so as to be able to monitor or operate the vehicle 1.

The operator is, for example, an occupant or a driver who rides on the vehicle 1. The operator performs operation related to the control of the vehicle 1 in accordance with to the situation. For example, the operator monitors a condition of the autonomous driving and a situation around the vehicle 1 and, when determining that it is necessary, performs operation regarding at least one of steering, acceleration, and deceleration of the vehicle 1 to intervene in the autonomous driving control. Alternatively, the operator may perform necessary operation in response to a request from the autonomous driving system. For example, in a case where a vehicle traveling at a low speed is present in front of the vehicle 1, the autonomous driving system may require the operator to determine whether to overtake the preceding vehicle or not. In this case, the operator inputs an instruction to overtake or not to overtake to the autonomous driving system in response to the request from the autonomous driving system.

As the request from the autonomous driving system to the operator, an enforced operation request and an arbitrary operation request are assumed. Examples of the enforced operation request include a hands-on request. For example, as a case of the enforced operation request, it is assumed that when the recognition unit 20 cannot correctly recognize a lane marking, the autonomous driving system requests the driver to start driving on behalf of the system. If the operator does not respond to the enforced operation request like this, there is a possibility that the vehicle 1 cannot continue traveling and the autonomous driving system stops the vehicle 1. In contrast, in the case of the arbitrary operation request, the vehicle 1 can continue traveling even if the operator does not respond to the request. Examples of the arbitrary operation request include a request for the operator to determine whether to perform overtaking or not or perform lane change or not. For example, it is assumed that the autonomous driving system requires the operator to determine whether to overtake a preceding vehicle or not. In this case, even if the operator does not respond to the request, the autonomous driving system only controls the vehicle 1 to continue traveling following the preceding vehicle and the traveling itself of the vehicle 1 is not prevented from being continued.

As another example, the operator may be an operator who stands by at a remote terminal outside the vehicle 1 and may remotely monitor or operate the vehicle 1.

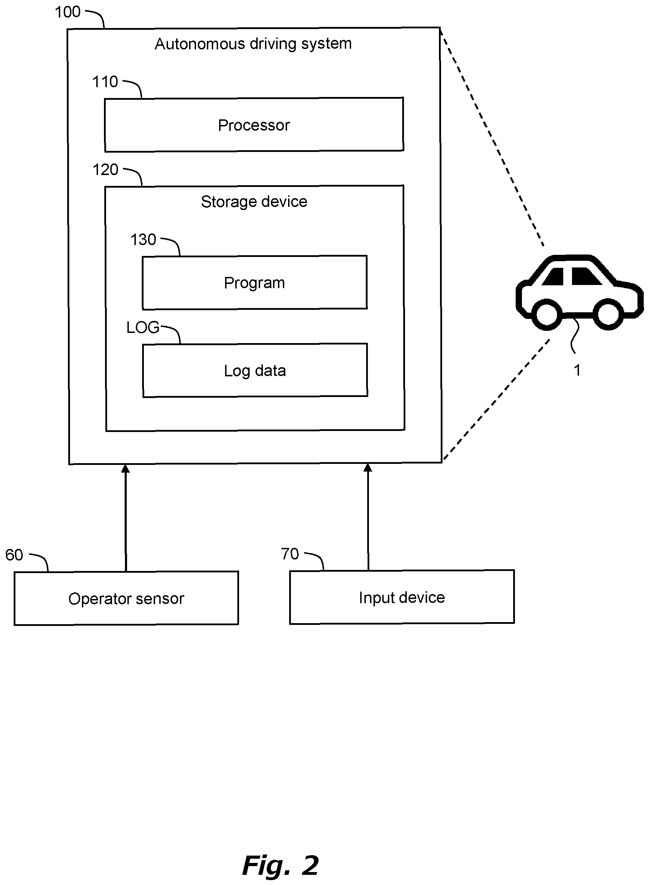

Fig. 2 is a schematic diagram showing a configuration example of the autonomous driving system 100 according to the present embodiment. The autonomous driving system 100 is mounted on the vehicle 1 and performs the autonomous driving control of the vehicle 1. The autonomous driving system 100 includes at least the function of the above-described autonomous driving control unit. The autonomous driving system 100 may further include the sensor group 10 and the travel device 50.

The autonomous driving system 100 is configured to be able to communicate with an operator sensor 60 and an input device 70 via a wired network or a wireless network. The operator sensor 60 is a sensor which acquires a state of the operator. Examples of the operator sensor 60 include a driver monitor (camera) and a camera which captures an image of the inside of the vehicle. The input device 70 is a device for the operator to input the operation. The input device 70 includes an accelerator pedal, a brake pedal, a steering wheel, a touch panel, a button, and the like. The operator inputs, for example, an instruction to overtake or not to overtake into the input device 70 in response to the request from the autonomous driving system 100.

The autonomous driving system 100 includes one or more processors 110 (hereinafter, simply referred to as a processor 110 or processing circuitry) and one or more storage devices 120 (hereinafter, simply referred to as a storage device 120).

The processor 110 executes various processes. Examples of the processor 110 include a central processing unit (CPU), a graphics processing unit (GPU), an application specific integrated circuit (ASIC), and a field-programmable gate array (FPGA).

The storage device 120 stores a program 130 and various kinds of information. Examples of the storage device 120 include a hard disk drive (HDD), a solid state drive (SSD), a volatile memory, and a nonvolatile memory. Various kinds of information stored in the storage device 120 include log data LOG related to the autonomous driving control.

The program 130 is a computer program for controlling the vehicle 1 and is executed by the processor 110. Various processes by the autonomous driving system 100 may be realized by cooperation of the processor 110 executing the program 130 and the storage device 120. The program 130 may be recorded in a computer-readable recording medium.

While the autonomous driving of the vehicle 1 using the machine learning model is performed, the processor 110 acquires the log data LOG related to the performed autonomous driving and stores the log data LOG in the storage device 120.

The log data LOG includes at least system data related to behavior of the autonomous driving system 100. The system data includes data input to the autonomous driving control unit and data output from the autonomous driving control unit. The system data may include output from an intermediate layer of the autonomous driving control unit. For example, the system data includes at least a part of the sensor detection information SEN, the recognition result information RES, the target trajectory TRJ, and the control amount CON. The system data may further include data indicating a reason for determination in the recognition process by the recognition unit 20, a reason for determination in the planning process by the planning unit 30, and the like. The stored system data is used for verification of the autonomous driving control using the machine learning model or the like.

The log data LOG may include operator data related to the state of the operator in addition to the system data. For example, the operator data includes a face image of the operator captured by the camera included in the operator sensor 60. As another example, the operator data may include a gaze direction of the operator acquired by analyzing the face image. As still another example, the operator data may include an operation state by the operator into the input device 70.

### 2. Processing related to storing log data

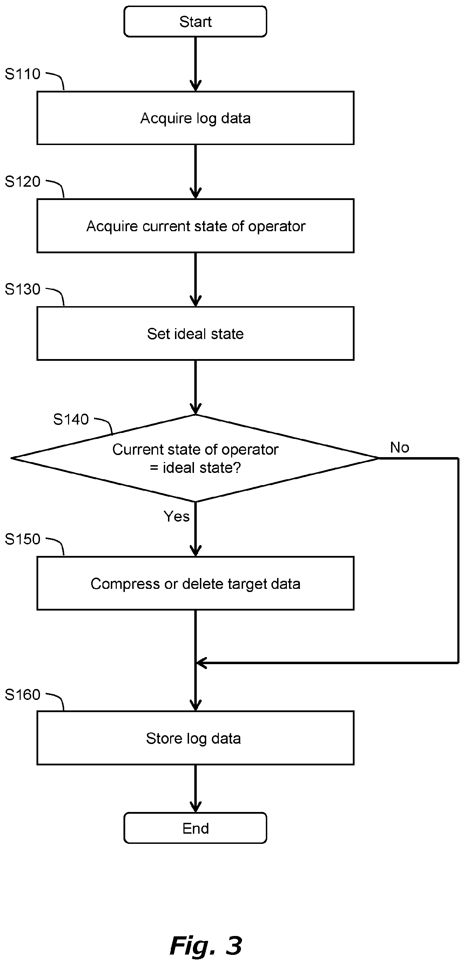

Processing related to storing the log data LOG by the processor 110 is described. Fig. 3 is a flowchart showing an example of processing executed by the autonomous driving system 100, more specifically, by the processor 110. The processing according to the flowchart shown in Fig. 3 is, for example, repeatedly executed at a predetermined processing cycle while the autonomous driving control is performed.

In Step S110, the processor 110 acquires the log data LOG related to the autonomous driving.

In Step S120, the processor 110 acquires a current state of the operator. The current state of the operator is a state of the operator at the time of acquisition of the log data LOG and is acquired by at least one of the operator sensor 60 and the input device 70.

For example, the data indicating the current state of the operator is data of the image obtained by the camera of the operator sensor 60 capturing the operator. Further, the processor 110 may determine which direction the face of the operator is facing by image analysis of the image obtained by capturing the operator and may acquire the direction in which the operator is facing as the current state. Alternatively, data indicating what kind of operation is input to the input device 70 by the operator may be acquired as data indicating the current state. As another example of the data obtained from the input device 70, whether the operator intervenes in the autonomous driving control or not may be acquired as the current state. Alternatively, whether the operator responds to the operation request from the autonomous driving system 100 may be acquired as the current state.

In Step S130, the processor 110 sets an ideal state. The ideal state is a state that the autonomous driving system 100 requires of the operator. For example, in a case where the autonomous driving system 100 requests certain operation of the operator, that the operator responds to the operation request may be set as the ideal state. Alternatively, in a case where the vehicle 1 is traveling forward at a steady speed, that the operator monitors a forward direction may be set as the ideal state. Alternatively, when the autonomous driving system 100 changes lanes, that the operator checks the adjacent lane, that is, a gaze direction of the operator is toward the adjacent lane may be set as the ideal state.

In Step S 140, the processor 110 determines whether the current state of the operator matches the ideal state or not. If the current state of the operator matches the ideal state (Step S140; Yes), the processing proceeds to Step S150. On the other hand, if the current state of the operator does not match the ideal state (Step S140; No), the processing proceeds to Step S160.

Whether the current state of the operator matches the ideal state is determined by comparing the current state acquired in Step S120 with the ideal state acquired in Step S130. For example, in a case where that the operator responds to the operation request is set as the ideal state and the operation in response to the request from the autonomous driving system 100 is input to the input device 70, it is determined that the current state matches the ideal state. Alternatively, for example, in a case where that the operator monitors a forward direction is set as the ideal state and it is determined that the operator is facing forward by image analysis of the image obtained by the camera of the operator sensor 60 capturing the operator, it is determined that the current state matches the ideal state.

In Step S150, the processor 110 compresses or deletes a part of the log data LOG. Hereinafter, in the present specification, a part of data of the log data LOG which becomes a target to be compressed or deleted is referred to as target data. Compressing the target data means that making the target data rough. Deleting the target data is completely deleting the target data. In Step S150, all of the target data may be compressed or deleted, or a part of the target data may be deleted and a part of the target data may be compressed.

For example, the target data includes the operator data. For example, in a case where that the operator monitors the forward direction is the ideal state and the operator is facing forward, the face image itself of the operator does not necessarily need to be stored. By storing information indicating that the current state of the operator matches the ideal state instead of the face image itself of the operator, a volume of data to be stored can be reduced.

In Step S160, the processor 110 stores the log data LOG in the storage device 120. If it is determined that the current state of the operator matches the ideal state in Step S140, the log data LOG in which the target date is compressed or deleted is stored. If it is determined that the current state of the operator does not match the ideal state in Step S140, the log data LOG acquired in Step S110 is stored as it is. After the log data LOG is stored, the processing ends.

Effects of the processing is described. As described above, the log data LOG is stored in the storage device 120 in preparation for a case where it is necessary to verify how the autonomous driving control is performed later. That is, in order to fulfill responsibility for explanation about the autonomous driving, it is desirable that all data acquired as the log data LOG be stored as much as possible. However, since a capacity of the storage device 120 has a limitation, there is a possibility that the capacity becomes insufficient if all the log data LOG is stored. Therefore, it is required to reduce a volume of data to be stored while ensuring a capability for explanation about the autonomous driving.

According to the autonomous driving system 100 of the present embodiment, the log data LOG in which the target data is compressed or deleted is stored according to a condition. By compressing or deleting the target data, a volume of data to be stored can be reduced and the capacity of the storage device 120 can be preserved, compared to a case where all the acquired log data LOG is stored.

In addition, compression or deletion of the target data is not performed without any qualification, but the compression or the deletion is performed when the current state of the operator matches the ideal state. That the current state of the operator matches the ideal state means that the operator is in a state required by the autonomous driving system 100, in other words, that the operator sufficiently monitors the autonomous driving system 100. In such a case, the operator knows how the autonomous driving by the autonomous driving system 100 has been performed, and it is considered that the verification using the log data LOG is unlikely to be required. The target data is compresses or deleted in such a case, and thus it is possible to ensure a capability for explanation required for the log data LOG while reducing the data volume.

The processes from Step S140 to Step S160 may be executed not simultaneously with the acquisition of the log data LOG. For example, the processes from Step S110 to Step S130 may be repeatedly executed at a predetermined control cycle and all the log date LOG may be temporarily stored in the storage device 120 while the autonomous driving is performed. Then, it may be determined whether the current state of the operator matches the ideal state at the time of acquisition of the log data LOG or not and if the current state matches the ideal state, the target data may be deleted from the temporarily stored log data LOG or may be compressed, at arbitrary timing thereafter.

### 3. Determination of Target Data in Consideration of Log Storage Priority

The processor 110 may set log storage priority to each piece of data included in the log data LOG. The log storage priority is priority of storage and the data should be stored more preferentially as the log storage priority is higher.

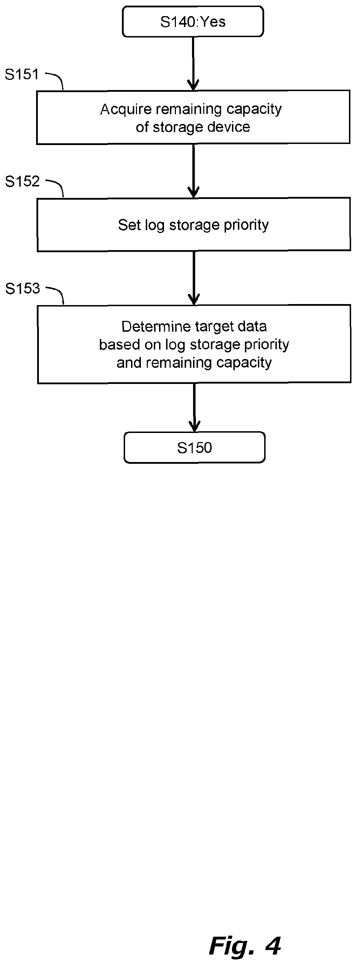

Fig. 4 is a flowchart showing an example of processing in a case where the log storage priority is set to the data included in the log data LOG. Processes from Step S110 to Step S140 are omitted since those are the same as those in the flowchart of Fig. 3. However, in Step S140, when it is determined that the current state of the operator matches the ideal state (Step S140; Yes), the processing proceeds to Step S151.

In Step S151, the processor 110 acquires a remaining capacity of the storage device 120. More specifically, the processor 110 acquires the remaining capacity of an area secured for storing the log data LOG in the storage device 120.

In Step S152, the processor 110 sets the log storage priority to each piece of data included in the log data LOG. The log storage priority is set to be higher as the data is more likely to be needed for later use in verification or the like, and the log storage priority is set to be lower as the data is less likely to be needed. The data that is more likely to be needed later is data indicating a situation of a part that is not sufficiently monitored by the operator. The processor 110 can determine which part the operator monitors and which part the operator does not monitor based on the current state of the operator acquired in Step S120.

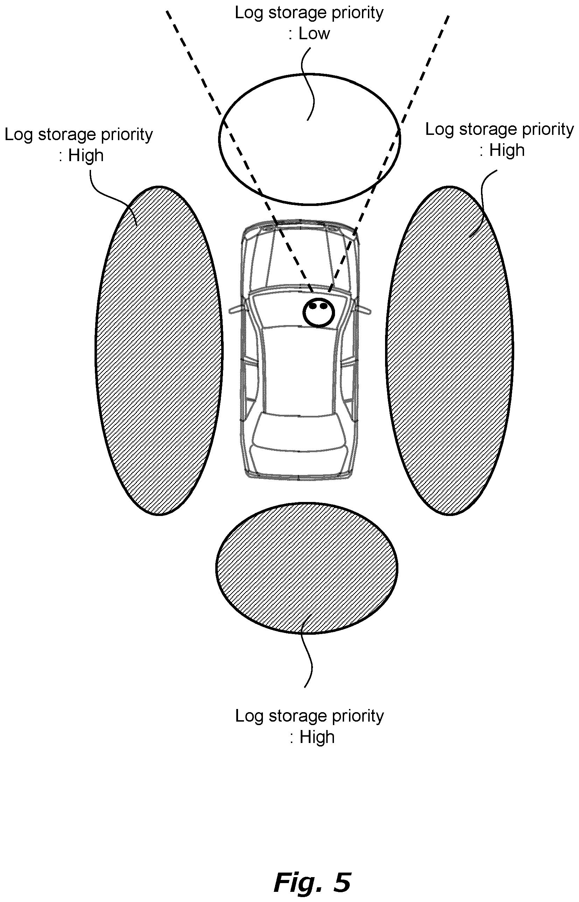

Fig. 5 is a schematic diagram for explaining an example of the log storage priority. Here, a case where the recognition sensor 11 includes a plurality of cameras is assumed, and the log storage priority of images captured by the cameras of the recognition sensor 11, among data included in the log data LOG, is considered. When the operator is facing forward, a range captured by the front camera is likely to be sufficiently monitored by the operator. In contrast, ranges captured by the side cameras and the rear camera are likely not to be sufficiently monitored by the operator. In such a case, the processor 110 sets the log storage priority of the image captured by the front camera to be lower and set the log storage priorities of the images captured by other cameras to be higher.

As another specific example, it is assumed that the recognition result information RES by the recognition unit 20 includes a recognition result regarding the rightward direction from the vehicle 1 and a recognition result regarding the leftward direction from the vehicle 1. In addition, it is assumed that a state where the operator looks rightward is acquired in Step S120 by image analysis of the image captured by the camera of the operator sensor 60. In this case, it is likely that the operator monitors a situation in the rightward direction from the vehicle 1 and does not monitor a situation in the leftward direction from the vehicle 1. Therefore, the log storage priority of the data indicating the recognition result in the leftward direction is set higher than that in the rightward direction.

When the log data LOG includes the operator data, the log storage priority may be set to each piece of data included in the operator data. In this case, similarly, the log storage priority is set higher as the data is more likely to be needed for later verification or the like, and the log storage priority is set lower as the data is less likely to be needed.

An example of how the log storage priority is set to the data included in the operator data is described. For example, the log storage priority may be set such that the height of the log storage priority of the data indicating whether the operator responds to the enforced operation request from the autonomous driving system 100, the data indicating whether the operator responds to the arbitrary operation request from the autonomous driving system 100, and the data indicating a gaze direction of the operator are in descending order.

The response of the operator to the enforced operation request has a larger influence on the autonomous driving of the vehicle 1 than the response of the operator to the arbitrary operation request. This is because, as described above, the vehicle 1 can continue traveling regardless of whether the operator responds to the arbitrary operation request or not, whereas the vehicle 1 may not continue traveling when the operator does not respond to the enforced operation request. Thus, whether the operator responds to the enforced operation request or not is more likely to be important in the later verification or the like. Therefore, the log storage priority of such data is set to be higher.

The data indicating the gaze direction of the operator is not necessarily required even when the later verification is required. This is because such data is useful as a basis for determining that the target data may be compressed or deleted but does not directly affect the autonomous driving control. Therefore, the log storage priority may be set lower.

Further, the log storage priority may be set to each piece of data included in the data indicating the gaze direction of the operator. Examples of the data indicating the gaze direction of the operator include an image itself obtained by the camera of the operator sensor 60 capturing the face of the operator, data indicating the angle of the operator's face, and data indicating only whether the operator faces a direction required by the autonomous driving system 100. These three pieces of data has the same meaning, but the latter data is more abstracted. Regarding these three pieces of data, the log storage priority is set to be higher as the data becomes more abstracted. This is because the data volume decreases and the possibility that the capacity of the storage device 120 is occupied when the data is stored becomes lower as the data is abstracted.

In Step S153, the processor 110 determines the target data based on the log storage priority determined in Step S152 and the remaining capacity of the storage device 120 acquired in Step S151. More specifically, the processor 110 sets data with a lower log storage priority as the target data prior to data with a higher log storage priority. The processor 110 selects the target data such that the total volume of the target data becomes small when the remaining capacity of the storage device 120 is large and the total volume of the target data becomes large when the remaining capacity of the storage device 120 is small.

When the target data is determined, the processing proceeds to Step S150 of the flowchart of Fig. 3 and the target data is compressed or deleted.

In this way, if the log storage priority is set to each piece of data included in the log data LOG, it is more effective in ensuring capability of explanation of the log data LOG. The data regarding a part sufficiently monitored by the operator is less likely to be required for the later verification or the like. Therefore, by selecting the data with the lower log storage priority prior to the data with the higher log storage priority as the target data, data to be stored can be made data which is more likely to be required later among the log data LOG. In this way, it is possible to prevent important information from being preferentially deleted while compressing or deleting the target data, and to more effectively secure easiness of explanation and the verification by the log data LOG.

## Claims

1. An autonomous driving system (100) mounted on a vehicle (1) and configured to perform autonomous driving of the vehicle (1) by using a machine learning model,
the autonomous driving system (100) comprising one or more processors (110) and one or more storage devices (120), wherein
when the autonomous driving is performed, the one or more processors (110) are configured to execute:
acquiring log data (LOG) related to the autonomous driving;
acquiring a current state of an operator of the vehicle (1);
acquiring an ideal state that is a state of the operator required by the autonomous driving system (100); and
storing the log data (LOG) in the one or more storage devices (120), and
storing the log data (LOG) includes compressing or deleting target data that is a part of the log data (LOG) when the current state of the operator matches the ideal state.

2. The autonomous driving system (100) according to claim 1, wherein the log data (LOG) includes system data related to behavior of the autonomous driving system (100) and operator data related to a state of the operator.

3. The autonomous driving system (100) according to claim 2, wherein the target data includes the operator data.

4. The autonomous driving system (100) according to any one of claims 1 to 3, wherein
the one or more processors (110) are further configured to execute setting log storage priority to each piece of data included in the log data (LOG), and
storing the log data (LOG) includes setting data of which the log storage priority is lower as the target data prior to data of which the log storage priority is higher when the current state of the operator matches the ideal state.

5. The autonomous driving system (100) according to claim 4, wherein
the log data (LOG) includes recognition data acquired by recognizing surroundings of the vehicle (1), and
setting the log storage priority includes setting the log storage priority of the recognition data regarding a range monitored by the operator to be lower than the log storage priority of the recognition data regarding a range not monitored by the operator.
